# FASCICULE DE BREVET EUROPEEN

(11) **EP 4 382 776 B1**
(45) Date de publication et mention de la délivrance du brevet: **01.10.2025**
(21) Numéro de dépôt: 23214023.6
(22) Date de dépôt: 04.12.2023
(51) Int. Cl.: F16H 57/04, F02C 7/36, F02C 7/06

(54) **GOUTTIÈRE DE RÉCUPÉRATION D'HUILE DE LUBRIFICATION POUR RÉDUCTEUR MÉCANIQUE COMPRENANT UN DÉFLECTEUR AMÉLIORÉ**
SCHMIERÖLRÜCKGEWINNUNGSRINNE FÜR REDUKTIONSGETRIEBE MIT VERBESSERTEM DEFLEKTOR
GUTTER FOR RECOVERING LUBRICATING OIL FOR REDUCTION GEAR COMPRISING AN IMPROVED DEFLECTOR

(30) Priorité: 09.12.2022 FR 2213106
(43) Date de publication de la demande: 12.06.2024
(73) Titulaire: Safran Transmission Systems, 92700 Colombes (FR)
(72) Inventeur: MARCOS IZQUIERDO, Juan-Luis, 77550 MOISSY-CRAMAYEL (FR); BOUYAKOUB, Mohamed, 77550 MOISSY-CRAMAYEL (FR); PENNACINO, Antoine Jacques Marie, 77550 MOISSY-CRAMAYEL (FR); SEBAN, Jérémy David, 77550 MOISSY-CRAMAYEL (FR); PELTIER, Jordane Emile André, 77550 MOISSY-CRAMAYEL (FR)
(74) Mandataire: Cabinet Beau de Loménie

(56) Documents cités:
- EP-A2- 2 163 733
- EP-B1- 1 923 540
- EP-B1- 1 925 855
- US-A- 5 494 355
- US-B1- 6 223 616

## Description

### Domaine Technique

La présente invention concerne le domaine des réducteurs mécaniques pour turbomachine d'aéronef, tels que des réducteurs planétaires entre autres. La présente invention concerne en particulier une gouttière de récupération d'huile de lubrification pour un tel réducteur mécanique, comprenant un déflecteur, et un dispositif de transmission de puissance comprenant un tel réducteur mécanique et une telle gouttière.

### Technique antérieure

Les réducteurs mécaniques sont couramment utilisés en mécanique, notamment dans le domaine de l'aéronautique. Leur rôle est de modifier le rapport de vitesse et de couple entre un axe d'entrée et un axe de sortie d'un système mécanique.

Les nouvelles générations de turbomachines à plusieurs flux, notamment celles ayant un haut taux de dilution, comportent un réducteur mécanique pour entraîner l'arbre d'une soufflante ou d'une hélice. De manière usuelle, le réducteur permet de transformer la vitesse de rotation, dite rapide, de l'arbre d'une turbine de puissance, en une vitesse de rotation plus lente pour l'arbre entraînant la soufflante.

Un tel réducteur comprend classiquement un pignon central, dit « pignon solaire », une couronne externe, et des pignons, dits « pignons satellites », qui sont en prise entre le pignon solaire et la couronne externe. Les pignons satellites sont maintenus par un châssis appelé porte-satellites. Le pignon solaire, la couronne externe et le porte-satellites sont des organes planétaires, car leurs axes de révolution coïncident avec l'axe longitudinal de la turbomachine. En revanche, les pignons satellites ont chacun un axe de révolution différent de l'axe de révolution de la turbomachine, et répartis à intervalles réguliers sur le même diamètre de fonctionnement autour, de l'axe des roues planétaires. Ces axes des pignons satellites sont parallèles à l'axe longitudinal de la turbomachine.

Il existe plusieurs architectures de réducteur mécanique. Les réducteurs mécaniques connus, utilisés dans les turbomachines à double flux, sont de type planétaire ou épicycloïdal. Il existe également des architectures dites différentielles. Ces différents types de réducteurs mécaniques se différencient de la manière suivante :
- Sur un réducteur planétaire, le porte-satellite est fixe et la couronne externe constitue l'arbre de sortie du dispositif, qui tourne dans le sens inverse du pignon solaire.
- Sur un réducteur épicycloïdal, la couronne externe est fixe et le porte-satellites constitue l'arbre de sortie du dispositif, qui tourne dans le même sens que le pignon solaire.
- Sur un réducteur différentiel, aucun élément n'est fixé en rotation. La couronne externe tourne dans le sens contraire du pignon solaire et du porte-satellites.

Dans un réducteur planétaire notamment, l'huile de lubrification et de refroidissement utilisée pour lubrifier les différentes roues du réducteur est généralement évacuée par centrifugation par l'intermédiaire de canaux radiaux formés dans une bride de la couronne externe. Pour empêcher l'huile d'être projetée vers l'extérieur et limiter les pertes, il est connu d'utiliser des gouttières de récupération d'huile disposées autour de la bride des couronnes externes, permettant de récupérer l'huile projetée par la force centrifuge. EP 1 925 855 B1, EP 2 163 733 A2 et US 6 223 616 B1 divulguent des exemples de systèmes de transmission de puissance comprenant un dispositif de récupération d'huile de lubrification.

Cependant, les gouttières existantes ne permettent pas de récupérer l'huile de manière satisfaisante. En particulier, certaines gouttières ne permettent pas de retenir l'huile qui peut alors retomber sur les pièces tournantes du réducteur par gravité. D'autres gouttières peuvent retenir en partie l'huile, sans pouvoir empêcher une quantité importante d'huile projetée de rebondir sur les parois de la gouttière compte tenu de l'accélération centrifuge et de la vitesse d'éjection tangentielle de l'huile, et de retomber sur les pièces tournantes. Or, lorsque l'huile carénée par une gouttière retombe sur une pièce tournante (la couronne, le porte couronne, la bride de la couronne par exemple) elle peut provoquer des pertes par transferts de quantité de mouvements non négligeables. De même, les déflecteurs disposés en partie inférieure de la gouttière et permettant de guider l'huile de la partie principale de la gouttière vers un point d'aspiration, ne permettent pas de collecter l'huile de manière suffisamment efficace.

Il existe donc un besoin pour une gouttière permettant de remédier au moins en partie aux inconvénients précités.

### Exposé de l'invention

La présente invention concerne une gouttière de récupération d'huile de lubrification, notamment pour réducteur mécanique de turbomachine d'aéronef, la gouttière telle que définie dans la revendication 1 comprenant un corps principal annulaire autour d'un axe central, et un déflecteur fixé au corps principal et configuré pour permettre l'évacuation de l'huile radialement depuis une cavité interne du corps principal vers l'extérieur de la gouttière, le déflecteur comprenant un manchon principal disposé dans la continuité du corps principal, et un canal d'évacuation configuré pour dévier de l'huile du manchon principal et présentant une forme courbe de telle sorte qu'une première extrémité du canal d'évacuation, communiquant avec la cavité interne, est tangente au corps principal, le canal d'évacuation déviant ensuite progressivement, par sa forme courbe, jusqu'à une deuxième extrémité dirigée vers l'extérieur par rapport au corps principal annulaire.

On comprend que la deuxième extrémité du canal d'évacuation est dirigée radialement vers l'extérieur, ou dans une direction sensiblement radiale vers l'extérieur par rapport au corps principal annulaire.

Dans la présente invention, les termes « radial », « axial », « tangent » et leurs dérivés sont considérés selon l'axe central du corps principal annulaire de la gouttière, ou encore l'axe principal de rotation du réducteur mécanique de vitesse décrit ultérieurement. Ainsi, une direction radiale est une direction perpendiculaire à l'axe central, et l'expression « vers l'extérieur » ou « radialement vers l'extérieur » signifie que l'huile est évacuée radialement en s'éloignant de l'axe central.

De même, les termes « haut », « bas », « inférieur », « supérieur » et leurs dérivés sont considérés par rapport à une direction verticale, correspondant à la direction normale de la gravité. On comprend donc que le déflecteur est de préférence fixé sur une portion inférieure du corps principal, de manière à collecter l'huile s'écoulant dans la cavité interne du corps principal vers le bas.

On comprend à ce titre que la cavité interne du corps principal est la cavité permettant de récupérer l'huile projetée par le réducteur mécanique, et dans laquelle circule ladite huile récupérée. Cette huile récupérée s'écoule donc dans la cavité interne vers le bas, en direction du déflecteur.

On comprend en outre que le manchon principal est disposé dans la continuité du corps principal, en ayant un rayon de courbure égal au rayon de courbure dudit corps principal. Le manchon principal peut être d'un seul tenant avec le corps principal, et être en d'autres termes une portion dudit corps principal, ou peut être une pièce distincte du corps principal en étant rapporté à celui-ci.

A l'inverse, le canal d'évacuation dévie par rapport au manchon central, et donc par rapport au corps principal. Plus précisément, la première extrémité du canal d'évacuation est disposée dans la continuité du corps principal en étant tangent à celui-ci, puis dévie progressivement, par sa forme courbe, depuis la première extrémité jusqu'à la deuxième extrémité.

On comprend ainsi que, dans une vue de face de la gouttière parallèle à l'axe central, le canal d'évacuation a une première courbure, par exemple en arc de cercle, comprise dans un plan perpendiculaire à l'axe central. En d'autres termes, la courbure du canal d'évacuation comprend une composante tangentielle et une composante radiale permettant de dévier progressivement l'huile depuis le corps principal vers l'extérieur de la gouttière.

Cette architecture du déflecteur, et notamment la forme du canal d'évacuation, permet de dévier et guider progressivement l'huile de lubrification depuis le corps principal de la gouttière vers un point d'aspiration extérieur à la gouttière permettant de collecter l'huile récupérée par la gouttière et de réutiliser cette huile. Ce guidage progressif permet de limiter le ralentissement de l'huile et le risque d'accumulation de l'huile (dit effet de « bourrage ») pouvant mener à un débordement de la gouttière. Il est ainsi possible d'améliorer le taux de récupération de l'huile, et de diminuer les pertes.

La forme courbe du canal d'évacuation comprend une composante axiale de telle sorte que le canal d'évacuation est configuré pour dévier de l'huile du manchon principal dans la direction de l'axe central.

On comprend ainsi que, dans une vue de dessus du déflecteur perpendiculaire à l'axe central, le canal d'évacuation a une deuxième courbure comprise dans un plan parallèle à l'axe central. En d'autres termes, la courbure du canal d'évacuation comprend à la fois une composante tangentielle, une composante axiale et une composante radiale permettant de dévier progressivement l'huile depuis la cavité interne du corps principal, latéralement par rapport au corps principal et par rapport au manchon principal, puis radialement vers l'extérieur de la gouttière.

Cette configuration permet d'améliorer davantage le taux de récupération de l'huile, et de diminuer les pertes, en positionnant le point de sortie de l'huile récupérée par la gouttière au plus près du point d'aspiration, et en vis-à-vis de celui-ci. Ainsi, la composante axiale apporte une flexibilité dans l'intégration du réducteur au sein de l'enceinte entourant le réducteur, en disposant la sortie d'huile à la verticale du point d'aspiration. En outre, il est ainsi possible de libérer de l'espace sous le déflecteur, permettant notamment de disposer une bride de fixation pour fixer la gouttière à un carter par l'intermédiaire du déflecteur.

Dans certains modes de réalisation, un angle de déviation d'huile du canal d'évacuation par rapport au manchon principal est un angle entre une première droite tangente au corps principal annulaire et perpendiculaire à l'axe central, et une deuxième droite reliant un premier point d'une ligne de courbure moyenne du canal d'évacuation à un deuxième point disposé le long de ladite ligne de courbure moyenne, le premier point appartenant à la première droite et étant disposé à la première extrémité du canal d'évacuation et le deuxième point étant situé à une distance D du premier point où 0 < D ≤ 30 mm, l'angle de déviation étant inférieur à 40°.

On comprend que l'angle de déviation définit la déviation latérale, ou tangentielle (c'est-à-dire la déviation par rapport à la tangente au corps principal), du canal d'évacuation par rapport au manchon principal, ou par rapport au corps principal. Cette valeur d'angle de déviation inférieure à 40° permet un guidage progressif de l'huile lors de son passage de la cavité interne du corps principal de la gouttière vers l'entrée du canal d'évacuation, limitant les turbulences engendrées lors de cette déviation et améliorant ainsi l'efficacité de la récupération de l'huile.

Dans certains modes de réalisation, une distance B entre la première extrémité et la deuxième extrémité du canal d'évacuation dans une direction parallèle à l'axe central, et une distance C entre lesdites première et deuxième extrémités dans une direction perpendiculaire à l'axe central et à une direction radiale du corps principal annulaire, sont telles que B < C. Cette relation B < C permet un guidage progressif de l'huile améliorant ainsi davantage l'efficacité de la récupération de l'huile.

Dans certains modes de réalisation, le canal d'évacuation présente, entre la première extrémité et la deuxième extrémité, une section S fermée.

On comprend que quelle que soit la section S du canal d'évacuation considérée entre l'entrée et la sortie dudit canal, ladite section S est fermée. En d'autres termes, le canal d'évacuation ne comprend aucune ouverture entre sa première et sa deuxième extrémité, de telle sorte que l'huile ne peut pas s'échapper au cours de son passage dans le canal d'évacuation. Cela permet d'améliorer l'efficacité du guidage de l'huile vers l'extérieur de la gouttière. De préférence, la section du canal d'évacuation est dimensionnée en fonction du débit d'huile à récupérer, pour assurer une vitesse d'écoulement comprise entre 1.5 et 5 m/s dans le canal lorsqu'il est saturé.

Dans certains modes de réalisation, dans une vue parallèle à l'axe central, un angle β entre une droite passant par l'axe central et la première extrémité du canal d'évacuation, et une droite passant par l'axe central et la deuxième extrémité du canal d'évacuation, est tel que 5° < β < 120°.

On comprend que la vue parallèle à l'axe central correspond à une vue de face de la gouttière. On considère en outre, pour la première et la deuxième extrémité, un point central de la section d'entrée et de la section de sortie du canal d'évacuation respectivement. L'angle β est donc la plage angulaire sur laquelle s'étend le canal d'évacuation, dans cette vue de face. Ces valeurs permettent un guidage progressif de l'huile entre son admission par le déflecteur et son éjection radialement vers l'extérieur de la gouttière.

Dans certains modes de réalisation, le manchon principal renferme une enceinte interne communiquant avec la cavité interne du corps principal de la gouttière, une paroi radiale de séparation séparant l'enceinte interne en une première chambre de collecte d'huile en communication fluidique avec le canal d'évacuation, et une deuxième chambre de collecte d'huile comprenant une paroi de fond ayant une ouverture d'évacuation.

De préférence, la première chambre de collecte forme la première extrémité du canal d'évacuation, c'est-à-dire la portion du canal d'évacuation disposée dans la continuité de la cavité interne du corps principal et tangente au corps principal. En d'autres termes, la première extrémité du canal d'évacuation est confondue avec le manchon principal, avant que le canal d'évacuation dévie dudit manchon principal vers la deuxième extrémité du canal d'évacuation.

On comprend ainsi que la paroi radiale de séparation, qui est une paroi s'étendant dans un plan radial perpendiculaire à l'axe central, permet de séparer hermétiquement et axialement la première chambre et la deuxième chambre, de telle sorte qu'une portion de l'huile s'écoulant dans la cavité interne du corps principal vers le déflecteur est déviée d'un côté de la paroi radiale vers la première chambre, c'est-à-dire vers le canal d'évacuation, et une autre portion de l'huile est déviée vers la deuxième chambre, et évacuée de cette dernière par l'intermédiaire de l'ouverture d'évacuation. Ainsi, même si une quantité plus importante d'huile est évacuée par le canal d'évacuation, il est possible de récupérer de l'huile également par l'intermédiaire de l'ouverture d'évacuation, améliorant ainsi le taux de récupération.

Dans certains modes de réalisation, la cavité interne du corps principal de la gouttière comprend une chambre d'admission et une cavité d'évacuation communiquant avec la chambre d'admission sur au moins une partie de la circonférence du corps principal, la cavité d'évacuation communiquant avec la première chambre de collecte et la chambre d'admission communiquant avec la deuxième chambre de collecte.

La chambre d'admission déviant l'huile projetée par le réducteur vers la cavité d'évacuation, on comprend que la plus grande partie de l'huile provenant dudit réducteur s'écoule vers le déflecteur via la cavité d'évacuation, de telle sorte que la plus grande partie de l'huile récupérée dans le corps principal de la gouttière est évacuée via le canal d'évacuation du déflecteur. En d'autres termes, la plus grande partie de l'huile récupérée par la gouttière peut bénéficier des avantages de l'architecture du déflecteur, en étant guidée progressivement vers le point d'aspiration via le canal d'évacuation.

En outre, la portion de l'huile demeurant dans la chambre d'admission, c'est-à-dire n'ayant pas été déviée de la chambre d'admission vers la cavité d'évacuation ou ayant rebouclé dans la cavité d'évacuation et étant retournée dans la chambre d'admission, peut être également évacuée vers l'extérieur via la deuxième chambre de collecte et l'ouverture d'évacuation.

Dans certains modes de réalisation, le corps principal comprend une paroi de ségrégation séparant la chambre d'admission et la cavité d'évacuation sur une portion de la circonférence du corps principal en amont du déflecteur.

On comprend que la cavité d'évacuation communique avec la chambre d'admission sur la plus grande partie de la circonférence du corps principal, hormis sur une portion en amont du déflecteur et adjacente à celui-ci, où la paroi de ségrégation empêche la communication entre la cavité d'évacuation et la chambre d'admission.

Ainsi, les portions de l'huile s'écoulant respectivement dans la chambre d'admission et dans la cavité d'évacuation sont séparées et isolées l'une de l'autre par l'intermédiaire de la paroi de ségrégation, avant même leur admission dans la première et la deuxième chambre de collecte du déflecteur. Cela permet d'augmenter davantage la quantité d'huile évacuée via le canal d'évacuation, et ainsi d'améliorer davantage le taux de récupération.

Dans certains modes de réalisation, le corps principal comprend, dans un plan de coupe parallèle à l'axe central, une première paroi radiale s'étendant radialement par rapport à l'axe central, au moins une paroi inclinée s'étendant depuis une extrémité radiale externe de la première paroi radiale, une portion de guidage ayant une forme générale en U s'étendant depuis une extrémité de la paroi inclinée, et une deuxième paroi radiale s'étendant radialement vers l'extérieur par rapport à l'axe central depuis une extrémité de la portion de guidage, un espace délimité par la première paroi radiale, la deuxième paroi radiale et la paroi inclinée formant la chambre d'admission de l'huile de lubrification, et un espace délimité par la portion de guidage et la deuxième paroi radiale formant la cavité d'évacuation de l'huile de lubrification.

La première paroi radiale et la deuxième paroi radiale s'étendent radialement, c'est-à-dire perpendiculairement à l'axe central. En d'autres termes, la première paroi radiale et la deuxième paroi radiale sont des parois annulaires s'étendant dans un plan radial perpendiculaire à l'axe central. La première et la deuxième paroi radiale sont donc parallèles entre elles.

On comprend en outre que la paroi inclinée est inclinée par rapport à la première paroi radiale depuis laquelle elle s'étend, et donc inclinée par rapport à la direction radiale. La paroi inclinée a donc une forme tronconique et évasée vers l'extérieur depuis la première paroi radiale.

Par ailleurs, on comprend que la portion de guidage s'étend à une première de ses extrémités depuis la paroi inclinée, jusqu'à la deuxième paroi radiale à une deuxième de ses extrémités. La forme en U peut notamment présenter deux parois latérales et un fond courbé. On comprend ainsi, selon ces caractéristiques, que le corps principal de la gouttière présente la forme générale d'un « G » selon le plan de coupe parallèle à l'axe central.

Ainsi, la présence de la première et de la deuxième paroi radiale, parallèles entre elles, forment une section d'entrée permettant de récupérer efficacement, dans la chambre d'admission, l'huile de lubrification projetée lorsque la gouttière de récupération est disposée autour d'un réducteur mécanique. En outre, la paroi inclinée permet de dévier l'huile éjectée vers la portion de guidage en forme de U, cette dernière guidant alors l'huile, compte tenu de sa forme, vers le fond de la cavité d'évacuation formée entre la portion de guidage et la deuxième paroi radiale.

La configuration du corps principal de la gouttière de récupération d'huile de lubrification selon l'invention, en forme générale de « G », ou d'escargot, permet donc d'améliorer l'efficacité de la récupération de l'huile éjectée par le réducteur mécanique en fonctionnement, en évitant à l'huile de retomber sur les parties tournantes du réducteur par gravité, et en limitant la quantité d'huile rebondissant sur les parois de la gouttière, et de guider efficacement l'huile vers le déflecteur. Il est ainsi possible de limiter les pertes de rendement du réducteur par transferts de quantité de mouvements de l'huile, et donc d'améliorer davantage le taux de récupération.

Dans certains modes de réalisation, le manchon principal a une première extrémité fixée à une première extrémité circonférentielle du corps principal, et une deuxième extrémité fixée à une deuxième extrémité circonférentielle du corps principal, le manchon principal comprenant une paroi de séparation circonférentielle séparant la première extrémité du manchon principal de sa deuxième extrémité.

On comprend que le corps principal annulaire forme un anneau ouvert, ses deux extrémités circonférentielles étant reliées par le manchon principal du déflecteur auquel elles sont fixées. La paroi de séparation circonférentielle permet d'empêcher l'huile atteignant le déflecteur via la première extrémité du manchon principal de remonter dans le corps principal dans le sens opposé, via la deuxième extrémité du manchon principal. La paroi de séparation circonférentielle permet donc de favoriser l'évacuation de l'huile par le canal d'évacuation ou par l'ouverture d'évacuation, et ainsi d'améliorer encore le taux de récupération.

Dans certains modes de réalisation, la deuxième chambre de collecte au moins est isolée de la deuxième extrémité du manchon principal par la paroi de séparation circonférentielle, une paroi de fond du manchon principal entre la deuxième extrémité du manchon principal et la paroi de séparation circonférentielle comprenant au moins un orifice radial d'évacuation.

En d'autres termes, la première et la deuxième chambre de collecte sont disposées du côté de la première extrémité du manchon principal par rapport à la paroi de séparation circonférentielle, cette dernière empêchant la deuxième chambre de collecte de communiquer avec la deuxième extrémité du manchon principal. La première chambre de collecte ne communique pas non plus avec la deuxième extrémité du manchon principal mais uniquement avec le canal d'évacuation. Ainsi, la portion de l'huile s'écoulant dans la cavité interne du corps principal de la gouttière vers le déflecteur, et étant collectée via la deuxième extrémité du manchon principal ne communiquant pas avec la première et la deuxième chambre de collecte, peut être évacuée vers l'extérieur via le au moins un orifice radial d'évacuation.

La présente invention concerne également un ensemble de transmission de puissance pour turbomachine d'aéronef, comprenant :
- un réducteur mécanique comprenant un pignon central et une couronne externe coaxiaux l'un avec l'autre autour d'un axe principal de rotation, et des pignons satellites engrenant avec le pignon central et la couronne externe, la couronne externe comprenant deux demi-couronnes ayant chacune une bride annulaire externe fixées l'une à l'autre,
- au moins un canal radial d'éjection d'huile formé entre les brides annulaires et configuré pour éjecter de l'huile de lubrification par centrifugation,
- une gouttière selon l'un quelconque des mode de réalisation précédents disposée radialement autour des brides annulaires, de telle sorte que la cavité interne de la gouttière soit radialement en regard du premier canal radial d'éjection d'huile.

La gouttière annulaire, notamment le corps principal, étant disposée autour de la couronne externe, et notamment des brides annulaires, l'axe central de la gouttière et l'axe principal de rotation du réducteur sont coaxiaux. On comprend en outre que les brides annulaires externes s'étendent radialement vers l'extérieur, c'est-à-dire dans une direction perpendiculaire à l'axe principal de rotation, un plan radial comprenant l'interface de jonction entre les brides annulaires et étant perpendiculaire à l'axe principal de rotation.

Le canal radial d'éjection d'huile peut être un orifice formé à l'interface de jonction entre les brides annulaires externes de la couronne externe, dans une direction radiale perpendiculaire à l'axe principal de rotation. Par ailleurs, le réducteur mécanique de vitesse est de préférence un réducteur planétaire ou différentiel, la couronne externe tournant alors autour de l'axe central. Par conséquent, lors de la rotation de la couronne externe, l'huile de lubrification circulant dans le réducteur mécanique peut être évacuée radialement vers l'extérieur par la force centrifuge, par l'intermédiaire du canal radial d'éjection d'huile, en direction de la gouttière, en particulier vers la cavité interne, notamment vers la chambre d'admission disposée radialement en vis-à-vis du canal radial d'éjection d'huile.

Dans certains modes de réalisation, le déflecteur est disposé dans une partie inférieure de la gouttière, de manière à ce que la deuxième extrémité du canal d'évacuation soit disposée à la verticale de l'axe principal de rotation dans une direction de gravité, la première extrémité du canal d'évacuation étant décalée par rapport à la deuxième extrémité d'un angle β dans un sens opposé à un sens de rotation de la couronne externe, où 5° < β < 120°.

Compte tenu de l'énergie cinétique transférée à l'huile par la rotation de la couronne externe, l'huile éjectée par celle-ci s'écoulera préférentiellement dans la cavité interne du corps principal de la gouttière dans un sens identique au sens de rotation de la couronne. En d'autres termes, la plus grande partie de l'huile éjectée par la couronne externe s'écoule dans la cavité interne dans le sens de rotation de la couronne externe. Le fait de décaler la première extrémité du canal d'évacuation par rapport à la deuxième extrémité dans un sens opposé au sens de rotation de la couronne externe permet donc d'améliorer l'efficacité du dispositif et d'améliorer le taux de récupération de l'huile.

En outre, une plus faible quantité d'huile peut s'écouler dans la cavité interne du corps principal de la gouttière par gravité dans le sens opposé au sens de rotation de la couronne externe, et être évacuée via le ou les orifices radiaux d'évacuation formés dans la paroi de fond du manchon principal.

Dans certains modes de réalisation, la cavité interne du corps principal de la gouttière comprend une chambre d'admission et une cavité d'évacuation communiquant avec la chambre d'admission sur au moins une partie de la circonférence du corps principal, la chambre d'admission étant disposée à une même position axiale le long de l'axe central qu'un plan radial d'éjection d'huile du réducteur comprenant l'au moins un canal radial d'éjection d'huile, de manière à récupérer l'huile de lubrification provenant du réducteur et la dévier vers la cavité d'évacuation Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est un plan en coupe axiale d'une turbomachine comprenant un réducteur planétaire,
[Fig. 2] La figure 2 représente schématiquement une vue détaillée de la turbomachine de la figure 1, notamment d'un dispositif de transmission de puissance comprenant le réducteur planétaire de la figure 1,
[Fig. 3] La figure 3 représente une vue en perspective d'une gouttière selon un mode de réalisation de l'invention,
[Fig. 4] La figure 4 représente schématiquement une vue de face d'un ensemble comprenant une gouttière de récupération d'huile selon l'invention, portée par un carter et disposée autour de la couronne externe du réducteur planétaire,
[Fig. 5] La figure 5 représente schématiquement une vue latérale dans un plan de coupe B-B de l'ensemble de la figure 4,
[Fig. 6] La figure 6 représente schématiquement une section transversale du corps principal de la gouttière de récupération d'huile de l'invention,
[Fig. 7] La figure 7 représente une vue en perspective du dessus d'un déflecteur de la gouttière de récupération d'huile de l'invention,
[Fig. 8] La figure 8 représente une vue en perspective du dessous du déflecteur de la gouttière de récupération d'huile de l'invention,
[Fig. 9] La figure 9 représente une vue en perspective partielle du dessous du déflecteur de la gouttière des figures 7 et 8, à une extrémité opposée,
[Fig. 10] La figure 10 représente une vue en perspective partielle de la gouttière de l'invention, au niveau d'une jonction entre le déflecteur et le corps principal de la gouttière,
[Fig. 11] La figure 11 représente schématiquement une vue en plan du dessus du déflecteur.

### Description des modes de réalisation

Dans la suite de la description, les termes « radial », « axial », « tangentiel », « interne », « externe » et leurs dérivés sont considérés par rapport à l'axe central X de la gouttière 100 décrite ci-après, ou de l'axe principal de rotation Y du réducteur mécanique 10. Ainsi, une direction radiale R est perpendiculaire à l'axe central X, et une direction axiale est parallèle à l'axe central X. De même, une paroi radiale est perpendiculaire à l'axe central X, et une paroi axiale est parallèle à l'axe central X. En outre, une direction tangentielle T est perpendiculaire à l'axe central X et à la direction radiale R.

Par ailleurs, les termes « haut », « bas », « inférieur », « supérieur », « dessus » ou « dessous » et leurs dérivés sont considérés par rapport à une direction verticale, correspondant à la direction normale de la gravité. En particulier, les parties inférieures de la gouttière correspondent aux régions situées en bas sur les figures.

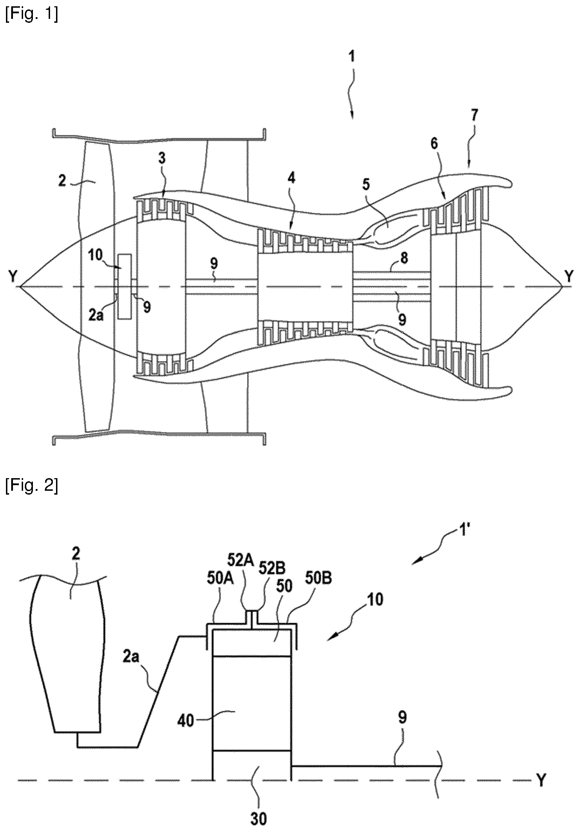

La figure 1 représente, en coupe selon un plan vertical passant par son axe principal Y, une turbomachine d'aéronef, notamment un turboréacteur 1 à double flux à réducteur. Il comporte, d'amont en aval selon la circulation du flux d'air, une soufflante 2, un compresseur basse-pression 3, un compresseur haute-pression 4, une chambre de combustion 5, une turbine haute-pression 6, et une turbine basse-pression 7.

Dans un tel turboréacteur à réducteur 1, la turbine haute-pression 6 entraîne le compresseur haute-pression 4 à l'aide d'un arbre haute-pression 8. La turbine basse-pression 7, également appelée turbine rapide, entraîne quant à elle le compresseur basse-pression 3, également appelé compresseur rapide, à l'aide d'un arbre basse-pression 9. La turbine rapide 7 entraîne également l'arbre de rotor 2a de la soufflante 2 par l'intermédiaire d'un réducteur de vitesse mécanique 10 (nommé plus simplement « réducteur mécanique 10 » dans la suite de la description). De cette manière, la soufflante 2 peut être entraînée à vitesse réduite, ce qui est favorable du point de vue aérodynamique, tandis que le compresseur basse-pression 3 peut être entraîné à vitesse plus importante, ce qui est favorable d'un point de vue thermodynamique. Le réducteur mécanique 10 peut être un réducteur mécanique planétaire. De manière alternative, le réducteur mécanique peut être un réducteur à train épicycloïdal, ou un réducteur différentiel. On notera en outre que l'invention s'applique aux réducteurs mécaniques comprenant des porte-satellites monoblocs ou de type « cage et porte-cage ».

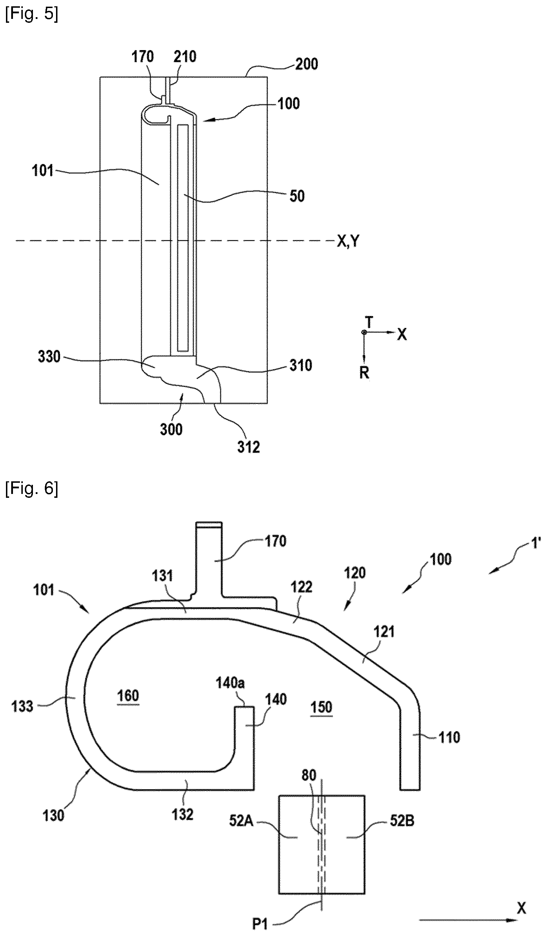

La figure 2 représente, en coupe et selon le même plan vertical passant par son axe principal Y, une vue détaillée et schématique du turboréacteur 1 de la figure 1, notamment du dispositif de transmission de puissance 1' comprenant le réducteur mécanique 10, et la figure 6 représente, outre la gouttière 100 décrite en détails ultérieurement, une vue détaillée d'une extrémité radialement externe du dispositif 1' de la figure 2.

Le réducteur mécanique 10 est par exemple un réducteur mécanique à train planétaire double étage formé d'un train d'engrenage connu sous l'acronyme anglais RGB pour « *Reduction Gear Box* ». Certaines pièces, comme les portes satellites ou le carter entourant le réducteur, étant masquées pour en faciliter la description. Le réducteur mécanique 10 comprend un pignon solaire 30, comprenant une pluralité de dents sur sa face radialement externe, et une couronne externe 50 comprenant une pluralité de dents sur sa face radialement interne. Le pignon solaire 30 et la couronne externe 50 sont coaxiaux et axisymétriques autour de l'axe principal de rotation Y. Le réducteur mécanique 10 comprend en outre des pignons satellites 40, classiquement au moins trois, chacun étant disposé entre le pignon solaire 30 et la couronne externe 50, en étant en prise avec ces derniers, et chacun tournant autour d'un axe de rotation sensiblement parallèle à l'axe principal de rotation Y.

De manière classique, la couronne externe 50 comprend deux demi-couronnes 50A, 50B, comprenant chacune une bride annulaire externe 52A, 52B. Les deux demi-couronnes 50A, 50B sont assemblées par l'intermédiaire des brides annulaires externes 52A, 52B et de moyens de fixation axiaux tels que des vis et écrous (non représentés).

En outre, le pignon solaire 30 est couplé à l'arbre basse-pression 9, et la couronne externe 50 est couplée à la soufflante 2 par l'intermédiaire de l'arbre de rotor 2a.

Par ailleurs, dans cet exemple, la bride annulaire externe 52B de l'autre des deux demi-couronnes 50B est fixée à une bride radiale d'une autre pièce tournante (non représentée), par exemple une pièce permettant de caréner le réducteur mécanique 10.

Dans un tel réducteur 10, l'huile de lubrification qui est utilisée pour lubrifier et refroidir les différents roulements et dentures du réducteur 10 est généralement projetée par la force centrifuge à travers la couronne externe 50. Afin de faciliter l'éjection de cette huile, des canaux radiaux d'éjection d'huile sont formés à travers la couronne externe 50, notamment via des plans radiaux d'éjections d'huile formés entre les différentes brides radiales.

Plus précisément, dans cet exemple, un plan radial P1 est formé par l'interface de jonction entre les brides annulaires externes 52A, 52B des demi-couronnes 50A, 50B. On notera que l'invention s'applique également à des configurations comprenant plusieurs plans radiaux d'éjection d'huile. Des canaux radiaux d'éjection d'huile 80 (un seul est visible sur la figure 6) sont formés dans ce plan radial P1, et sont répartis circonférentiellement autour de l'axe principal de rotation Y. Le plan radial P1 d'éjection d'huile est perpendiculaire à l'axe principal de rotation Y.

Après éjection de l'huile de lubrification radialement vers l'extérieur via les canaux radiaux d'éjection d'huile 80 et en l'absence de gouttière, l'huile ruisselle ensuite par gravité vers le bas d'une enceinte formée par le carter 200 entourant le réducteur, où elle peut être pompée vers le réducteur pour être à nouveau utilisée. Ce mode de récupération présente cependant des inconvénients liés à l'absence de contrôle de la projection de l'huile. En outre, l'huile peut également retomber au moins en partie sur des pièces tournantes, générant alors des pertes parasites supplémentaires.

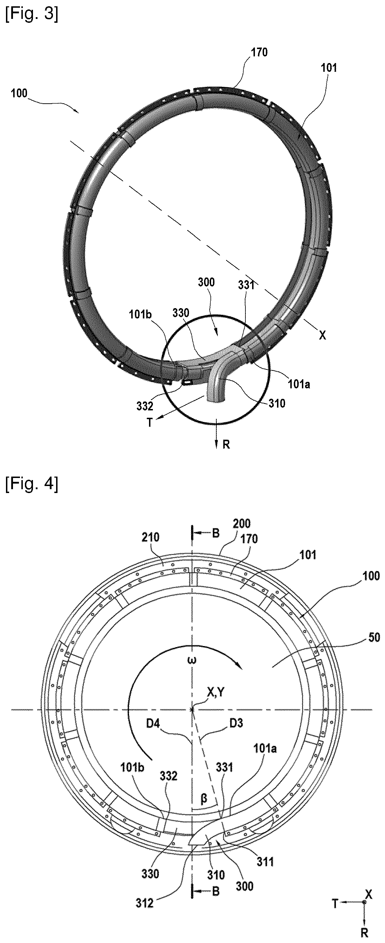

Pour limiter ces inconvénients, une gouttière annulaire 100 (nommée plus simplement gouttière 100 dans la suite de la description) de récupération d'huile est disposée autour de la couronne externe 50, et permet de collecter l'huile projetée par les canaux radiaux d'éjection d'huile 80. La gouttière 100 selon l'invention est décrite en référence aux figures 3 à 12.

La figure 3 représente une vue en perspective de la gouttière 100, et la figure 4 représente schématiquement une vue de face, parallèle à l'axe central X de la gouttière 100, d'un ensemble comprenant la couronne externe 50, la gouttière 100 et un carter 200 fixe du turboréacteur 1, portant la gouttière 100. La vue de face correspond à une vue dans le plan TR perpendiculaire à l'axe central X, défini par les directions tangentielle T et radiale R.

En outre, la figure 5 représente schématiquement une vue latérale en coupe de cet ensemble, perpendiculairement à l'axe central X, dans un plan de coupe B-B de l'ensemble de la figure 4. La vue latérale correspond à une vue dans le plan XR défini par les directions axiale X et radiale R. On notera que lorsque la gouttière 100 est disposée dans le turboréacteur 1, notamment dans le dispositif de transmission de puissance 1' autour de la couronne externe 50, l'axe central X de la gouttière 100 est coaxial et confondu avec l'axe principal de rotation Y du réducteur 10, autrement dit du turboréacteur 1.

La gouttière 100 comprend, sur sa périphérie radialement externe, une bride annulaire 170 fixée à une bride annulaire 210 du carter 200 (représenté volontairement de manière simplifiée), disposée le long d'une face radialement interne dudit carter 200. Ainsi, la gouttière 100 fixée au carter 200 fixe est elle-même fixe et immobile par rapport au carter 200 du turboréacteur 1.

En outre, la gouttière 100 comprend d'une part un corps principal 101 annulaire autour de l'axe central X, et d'autre part, dans sa partie inférieure, un conduit d'évacuation, ci-après nommé déflecteur 300 fixé au corps principal 101. L'huile déviée dans la cavité d'évacuation 160 décrite ci-après peut ainsi s'écouler le long de celle-ci par gravité jusqu'au déflecteur 300 par lequel elle peut être évacuée vers un point d'aspiration à l'extérieur du réducteur mécanique 10 sans retomber sur les différents organes mécaniques de celui-ci, et être éventuellement réutilisée pour lubrifier à nouveau ces organes mécaniques.

Par ailleurs, la gouttière 100 est disposée radialement autour de la couronne externe 50, de telle sorte que les brides annulaires externes 52A, 52B soient disposées radialement en vis-à-vis d'une section d'entrée de la gouttière 100 permettant de collecter l'huile éjectée par l'intermédiaire des canaux radiaux d'éjection d'huile 80.

A cet égard, la gouttière 100, et notamment le corps principal 101 et le déflecteur 300, selon un mode de réalisation de l'invention présentent une forme particulièrement avantageuse.

Dans un premier temps, le corps principal 101 est illustré plus en détails sur la figure 6, représentant une section transversale, perpendiculaire à une direction azimutale, du corps principal 101 disposée en vis-à-vis d'une extrémité radialement externe de la couronne externe 50, notamment des brides annulaires externes 52A, 52B de celle-ci. On notera que pour simplifier la description ci-après, axée sur la structure et la géométrie du corps principal 101 de la gouttière 100, certains éléments tels que le carter 200 ou la partie inférieure de la couronne externe 50 sont volontairement masqués sur la figure 6. En fait, outre la gouttière 100, seules les extrémités radiales des brides radiales 52A, 52B de la couronne externe 50 sont représentées.

Par « radialement en vis-à-vis », on comprend que les brides annulaires externes 52A, 52B, en particulier les canaux radiaux 80 et le plan radial P1 d'éjection d'huile, sont disposés à une même position axiale le long de l'axe central X, que la section d'entrée de la gouttière 100, et notamment sa chambre d'admission 150 décrite ci-après, de manière à récupérer l'huile éjectée par lesdits canaux radiaux d'éjection d'huile 80.

Par ailleurs, le corps principal 101 présente, selon cette section, la forme générale d'un « G », ou encore d'un escargot. Il comprend notamment une première paroi radiale 110, de forme annulaire autour de l'axe central X. Une paroi inclinée 120, de forme tronconique, s'étend depuis une extrémité radialement externe de la première paroi radiale 110, une extrémité radiale interne de la première paroi radiale 110 étant une extrémité libre. On notera que dans cet exemple non limitatif, la paroi inclinée 120 est formée en deux parties, et comprend deux parois inclinées 121, 122.

Par ailleurs, une portion de guidage 130 s'étend depuis une extrémité radialement externe de la paroi inclinée 120. La portion de guidage 130 présente, selon cette section de la gouttière 100, la forme générale d'un « U ». En particulier, la portion de guidage 130 comprend une première paroi axiale 131 s'étendant depuis l'extrémité radialement externe de la paroi inclinée 120 dans une direction s'éloignant de la première paroi radiale 110, une paroi courbe 133 s'étendant depuis une extrémité axiale de la première paroi axiale 131, cette portion de la gouttière effectuant alors un demi-tour de telle sorte à revenir vers la première paroi radiale 110, et une deuxième paroi axiale 132 s'étendant depuis l'autre extrémité de la paroi courbe 133 dans la direction de la première paroi radiale 110.

La gouttière 100 comprend enfin une deuxième paroi radiale 140 s'étendant radialement vers l'extérieur depuis une extrémité axiale de la deuxième paroi axiale 132, de forme annulaire autour de l'axe central X. La première paroi radiale 110 et la deuxième paroi axiale 140 sont parallèles entre elles et perpendiculaires à l'axe central X. Elles sont chacune disposées axialement de part et d'autre de l'ensemble formé par l'assemblage des brides radiales 52A, 52B.

Ainsi, les première et deuxième parois radiales 110, 140 forment une section d'entrée de la gouttière 100, par laquelle passe l'huile éjectée par les canaux radiaux d'éjection d'huile 80, et permettant de récupérer de manière efficace cette huile.

En particulier, la première paroi radiale 110, la paroi inclinée 120, et une première face de la deuxième paroi radiale 140, délimitent une chambre d'admission 150, dans laquelle est admise l'huile éjectée par les canaux radiaux d'éjection d'huile 80. En outre, la portion de guidage 130 et une deuxième face, opposée à la première face, de la deuxième paroi radiale 140, délimitent une cavité d'évacuation 160 de l'huile de lubrification, dans laquelle l'huile provenant de la chambre d'admission 150 est transférée et peut s'écouler. En particulier, l'huile éjectée et projetée par les canaux radiaux d'éjection d'huile 80 vient impacter la paroi inclinée 120. Du fait de l'inclinaison de celle-ci, l'huile impactant la paroi inclinée 120 est déviée vers la cavité d'évacuation 160. L'huile est ensuite guidée par la portion de guidage 130 en « U », notamment par la paroi courbe 133, vers le fond ladite cavité d'évacuation 160.

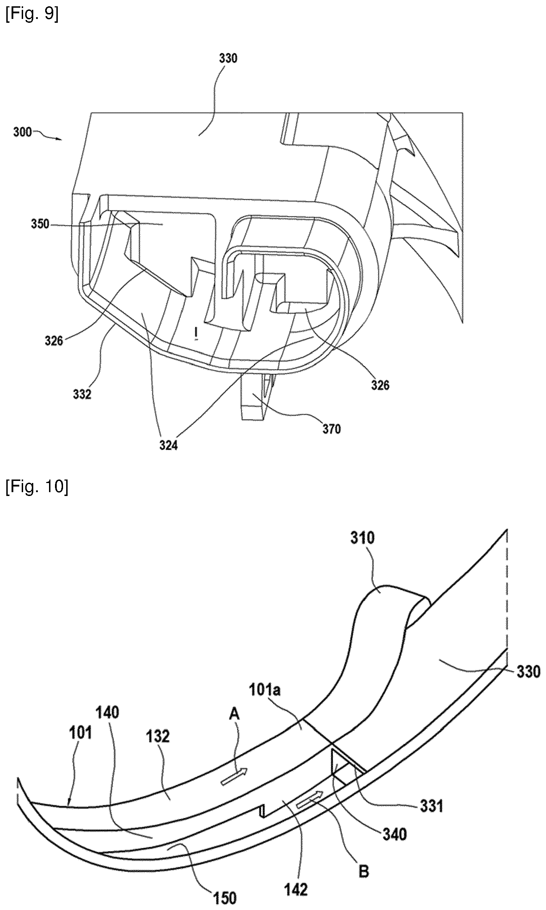

En particulier, la deuxième paroi radiale 140 forme une paroi latérale d'une cuvette de guidage permettant de guider l'huile vers le déflecteur, la deuxième paroi axiale 132 formant le fond de cette cuvette. À cet égard, une ouverture radiale entre l'extrémité radialement externe 140a de la deuxième paroi radiale 140, et la première paroi axiale 131 permet à l'huile de passer de la chambre d'admission 150 à la cavité d'évacuation 160, après déviation par la paroi inclinée 120. On notera cependant que sur une portion de la circonférence du corps principal 101, cette ouverture radiale est fermée par une paroi de ségrégation 142 (figure 10), empêchant la chambre d'admission 150 et la cavité d'évacuation 160 de communiquer entre elles. La paroi de ségrégation 142 est une paroi s'étendant dans un plan radial perpendiculaire à l'axe central X, et s'étend de préférence sur moins de 10% de la circonférence du corps principal 101, en amont du déflecteur 300 décrit ci-après, selon un sens d'écoulement de l'huile de du corps principal 101 vers la première extrémité 331 du manchon principal 330 du déflecteur 300.

Compte tenu de l'architecture décrite ci-dessus, la plus grande partie de l'huile récupérée par la gouttière 100 s'écoule dans la cavité d'évacuation 160, formant ainsi un écoulement principal A s'écoulant vers le bas en direction du déflecteur 300. Une plus faible quantité d'huile demeure dans la chambre d'admission 150 et forme un écoulement secondaire B.

Dans un deuxième temps, le déflecteur 300 va être décrit en détail dans la suite de la description, notamment en référence aux figures 4 et 7 à 11.

Le déflecteur 300 comprend un manchon principal 330 fixé au corps principal 101, et s'étendant circonférentiellement entre une première extrémité 331 et une deuxième extrémité 332. Le manchon principal 330 est disposé dans la continuité du corps principal 101, et présente le même rayon de courbure que celui-ci. Plus précisément, la première extrémité 331 du manchon principal 330 est fixée à une première extrémité circonférentielle 101a du corps principal 101, par exemple par emboitement ou par soudage, et la deuxième extrémité 332 du manchon principal est fixée à une deuxième extrémité circonférentielle 101b du corps principal 101, par exemple par emboitement ou par soudage.

Le manchon principal 330 comprend une enceinte interne I. Une paroi de séparation circonférentielle 350, disposée dans l'enceinte interne I, sépare la première extrémité 331 et la deuxième extrémité 332 du manchon principal 330, empêchant l'huile de circuler de la première extrémité 331 du manchon principal 330 vers la deuxième extrémité 332, et inversement.

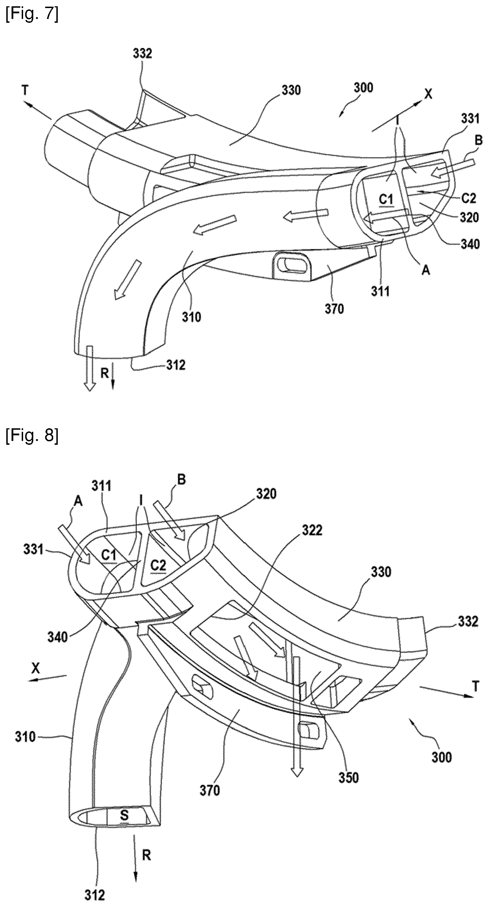

Par ailleurs, du côté de la première extrémité 331 du manchon principal 330 par rapport à la paroi de séparation circonférentielle 350, le manchon principal 330 comprend une paroi radiale de séparation 340 disposée dans l'enceinte interne I, et séparant l'enceinte interne I en une première chambre de collecte C1 (nommée ci-après première chambre C1) d'huile, et une deuxième chambre de collecte C2 (nommée ci-après deuxième chambre C2) d'huile comprenant une paroi de fond 320 ayant une ouverture d'évacuation 322. La première chambre C1 est en communication fluidique avec la cavité d'évacuation 160, et collecte l'écoulement principal A (dont le trajet est représenté par des flèches sur la figure 7). La deuxième chambre C2 est en communication fluidique avec la chambre d'admission 150 et collecte l'écoulement secondaire B (dont le trajet est représenté par des flèches sur les figures 7 et 8).

La paroi radiale de séparation 340, qui est une paroi s'étendant dans un plan radial perpendiculaire à l'axe central X, permet de séparer hermétiquement et axialement la première chambre C1 et la deuxième chambre C2, de telle sorte que la portion de l'huile s'écoulant dans la cavité d'évacuation 160 du corps principal 101 vers le déflecteur 300 est déviée d'un côté de la paroi radiale de séparation 340 vers la première chambre C1, et la portion de l'huile s'écoulant dans la chambre d'admission 510 du corps principal 101 est déviée de l'autre côté de la paroi radiale de séparation 340 vers la deuxième chambre C2. Ainsi, l'écoulement secondaire B d'huile pénétrant dans la deuxième chambre C2 est évacué de cette dernière par l'intermédiaire de l'ouverture d'évacuation 322 formée dans la paroi de fond 320, l'huile étant par ailleurs bloquée tangentiellement par la paroi de séparation circonférentielle 350, et étant donc forcée de s'évacuer par l'ouverture d'évacuation 322.

En outre, la paroi radiale de séparation 340 est disposée dans la continuité de la paroi de ségrégation 142 du corps principal 101, en étant de préférence en contact avec celle-ci (figure 10). Ainsi, les portions de l'huile s'écoulant respectivement dans la chambre d'admission 150 et dans la cavité d'évacuation 160 sont séparées et isolées l'une de l'autre par l'intermédiaire de la paroi de ségrégation 142, avant même leur admission dans la première et la deuxième chambre de collecte C1, C2.

Par ailleurs, le déflecteur 300 comprend un canal d'évacuation 310 fixé au manchon principal 330 et déviant de celui-ci. Le canal d'évacuation 310 s'étend entre une première extrémité 311 par laquelle l'écoulement principal A d'huile de lubrification est admis, et une deuxième extrémité 312 par laquelle l'huile est évacuée. La première extrémité 311 peut être dans la continuité de la première chambre C1, ou être confondue avec celle-ci, comme illustré sur les figures 7 et 8 notamment. En d'autres termes, dans ce dernier cas, la première extrémité 311 du canal d'évacuation 310 est confondue avec la première extrémité 331 du manchon principal 330, en étant située dans un même plan que celle-ci.

Ainsi, au niveau de la première extrémité 311, le canal d'évacuation 310 est tangent au corps principal 101 et notamment à la cavité d'évacuation 160, selon la direction tangentielle T. Plus précisément, une ligne de courbure moyenne du canal d'évacuation 310 est telle que, à la première extrémité 311, la ligne de courbure est tangente à la ligne de courbure moyenne de la cavité d'évacuation 160 du corps principal 101 et dans la continuité de cette ligne de courbure.

En outre, à la deuxième extrémité 312 du canal d'évacuation 310, ladite ligne de courbure moyenne du canal d'évacuation 310 est dirigée vers le bas et radialement par rapport à l'axe central X, dans la direction radiale R.

Ainsi, dans une vue de face de la gouttière 100 parallèle à l'axe central X, le canal d'évacuation 310 a une première courbure comprise dans le plan TR perpendiculaire à l'axe central X, défini par les directions tangentielle T et radiale R (figure 4). En d'autres termes, la courbure du canal d'évacuation 310 comprend une composante tangentielle et une composante radiale permettant de dévier et guider progressivement l'huile depuis le corps principal 101 vers l'extérieur de la gouttière 100, notamment vers un point d'aspiration.

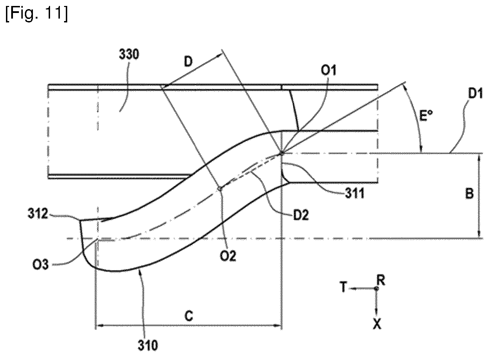

La courbure du canal d'évacuation 310 par rapport au manchon principal 330 comprend également une composante axiale. Plus précisément, dans une vue de dessus du déflecteur 300 perpendiculaire à l'axe central X (figure 11), le canal d'évacuation 310 a une deuxième courbure comprise dans le plan TX formé par les direction axiale X et tangentielle T, perpendiculaire à la direction radiale R. En d'autres termes, la courbure du canal d'évacuation 310 comprend à la fois une composante tangentielle, une composante axiale et une composante radiale permettant de dévier progressivement l'huile depuis la cavité d'évacuation 160 du corps principal 101.

Par ailleurs, dans cette vue du dessus du déflecteur 300 dans le plan TX, un angle de déviation d'huile E° tangentielle du canal d'évacuation 310, c'est-à-dire la déviation du canal d'évacuation 310 par rapport à la direction tangentielle T (en d'autres termes par rapport au manchon principal 330) et dans la direction axiale X, est défini de la manière suivante.

L'angle de déviation E° du canal d'évacuation est un angle entre une première droite D1 perpendiculaire à l'axe central X et à la direction radiale R, de préférence tangente à la gouttière 100 annulaire en un premier point O1 de la ligne de courbure moyenne du canal d'évacuation 310, et une deuxième droite D2 reliant le premier point O1 à un deuxième point O2 disposé le long de ladite ligne de courbure moyenne. Le premier point O1 est disposé à la première extrémité 311 du canal d'évacuation 310 et correspond sensiblement à un point d'inflexion d'une ligne moyenne d'écoulement de l'huile, et le deuxième point O2 étant situé à une distance D du premier point O1 où 0 < D ≤ 30 mm.

Ainsi, l'angle de déviation E° dans cette vue est inférieur à 40°. En d'autres termes, quel que soit la position du deuxième point O2 le long de la ligne de courbure moyenne, dès lors que la distance D entre le premier point et le deuxième point est telle que 0 < D ≤ 30 mm, l'angle de déviation E° reste inférieur à 40°. Le fait que D soit inférieure ou égale à 30 mm signifie que seule la partie amont du canal d'évacuation 310, par rapport au sens d'écoulement de l'huile depuis le corps principal 101 jusqu'à la deuxième extrémité 312 du canal d'évacuation 310, est considérée. On notera que la déviation tangentielle est également visible sur les figures 8 et 10.

Selon cette même vue dans le plan TX, la longueur B est la distance entre la première extrémité 311 et la deuxième extrémité 312 du canal d'évacuation 310 dans la direction axiale parallèle à l'axe central X. En d'autres termes, B est la distance entre le premier point O1, et un troisième point O3 situé sur la ligne de courbure moyenne de canal d'évacuation 310, dans le plan de sortie du canal d'évacuation 310 au niveau de sa deuxième extrémité 312. De même, la longueur C est la distance entre les points O1 et O3 dans la direction tangentielle T perpendiculaire à l'axe central X et à la direction radiale R, avec B < C.

On comprend que selon l'invention, le canal d'évacuation présente une forme courbe gauche, présentant la forme d'une trompe s'étendant dans les trois dimensions de l'espace. Par conséquent, une distance entre la première extrémité 311 et la deuxième extrémité 312 du canal d'évacuation 310 comprend trois composantes, dont les distances B et C. En d'autres termes, dans une vue de dessus du déflecteur 300, dans le plan XT, B correspond à la composante axiale de la distance entre la première et la deuxième extrémité 311, 312, et C correspond à la composante tangentielle.

Par ailleurs, le canal d'évacuation 310 présente, entre la première extrémité 311 et la deuxième extrémité 312, une section S fermée (figure 8). En d'autres termes, quelle que soit la section S du canal d'évacuation 310 considérée entre l'entrée et la sortie dudit canal, le canal d'évacuation 310 ne comprend aucune ouverture, de telle sorte que l'huile ne peut pas s'échapper au cours de son passage dans le canal d'évacuation 310.

En outre, la section du canal d'évacuation est dimensionnée en fonction du débit d'huile à récupérer, pour assurer une vitesse d'écoulement comprise entre 1.5 et 5 m/s dans la conduite lorsqu'elle est saturée.

Par ailleurs, dans une vue de face de la gouttière 100, parallèle à l'axe central X, c'est-à-dire dans la plan TR (figure 4), un angle β entre la droite D3 passant par l'axe central X et la première extrémité 311 du canal d'évacuation 310 (par exemple le premier point O1), et une droite D4 passant par l'axe central X et la deuxième extrémité 312 (par exemle le troisième point O3) du canal d'évacuation 310, est tel que 5° < β < 120°.

On comprend que la droite D4 s'étend dans la direction radiale R, correspondant à une direction verticale par rapport à la direction de gravité. L'angle β est donc la plage angulaire sur laquelle s'étend le canal d'évacuation 310 entre ses extrémité 311, 312, dans cette vue de face.

De plus, le déflecteur 300 est disposé dans une partie inférieure de la gouttière 300 lorsque celle-ci est disposée autour de la couronne externe 50 du réducteur 10, de manière à ce que la deuxième extrémité 312 du canal d'évacuation 310 soit disposée à la verticale de l'axe principal de rotation Y, en d'autres termes de l'axe central X. Ainsi, la première extrémité 311 du canal d'évacuation 310 est décalée par rapport à la deuxième extrémité 312 de l'angle β, dans un sens opposé à un sens de rotation ω de la couronne externe 50.

En d'autres termes, dans la vue de face de la gouttière 100, la plage angulaire β sur laquelle s'étend le canal d'évacuation 310 n'est pas centrée sur l'axe vertical, c'est-à-dire sur la droite D4, correspondant à la direction de gravité, mais est décalée le long de la circonférence de la gouttière 100 dans le sens opposé au sens de rotation ω de la couronne externe 50 du réducteur 10. En d'autres termes, la première extrémité 311 du canal d'évacuation 310, par laquelle l'huile est collectée, est plus proche du sommet de la gouttière 100 que la deuxième extrémité 312 du canal d'évacuation 310 par laquelle l'huile est évacuée, ladite la deuxième extrémité 312 étant alignée verticalement avec l'axe principal de rotation Y (ou l'axe central X).

La figure 9 représente une vue partielle en perspective du déflecteur 300, du côté de la deuxième extrémité 332 opposé à la première extrémité 331 par rapport à la paroi de séparation circonférentielle 350. On notera à cet égard que la structure du manchon principal 330 à cette extrémité présente une forme de « G » similaire à celle du corps principal 101 de la gouttière 100 décrit en référence à la figure 6, et pouvant ainsi s'emboiter dans le corps principal 101 par correspondance de forme.

Une paroi de fond 324 du manchon principal 330 entre la deuxième extrémité 332 du manchon principal 330 et la paroi de séparation circonférentielle 350 comprend au moins un orifice radial d'évacuation 326, dans cet exemple deux orifices radiaux d'évacuation 326, disposés respectivement dans les portions de l'enceinte interne I situées dans le prolongement de la chambre d'accumulation 150 et de la cavité d'évacuation 160 du corps principal 101.

On notera que, selon cet exemple non limitatif, cette région de l'enceinte interne I, du côté de la deuxième extrémité 332 du manchon principal 330 par rapport à la paroi de séparation circonférentielle 350, ne comprend pas de paroi radiale de séparation, contrairement à la région de l'enceinte interne I du côté de la première extrémité 331 du manchon principal 330 par rapport à la paroi de séparation circonférentielle 350, qui comprend la paroi radiale de séparation 340.

Compte tenu de cette architecture de la gouttière 100, l'huile de lubrification utilisée pour la lubrification du réducteur 10 est éjectée par la rotation de la couronne externe 50, le sens de rotation ω de celle-ci entrainant préférentiellement l'huile dans le sens allant vers la première extrémité 331 du manchon principal 330 du déflecteur 300. En particulier, compte tenu de la forme en « G » du corps principal de la gouttière 100, la plus grande partie de l'huile éjectée et récupérée par la gouttière 100 s'écoule dans la cavité d'évacuation 160 et est évacuée par le déflecteur 300 par l'intermédiaire du canal d'évacuation 310 via l'écoulement principal A, en étant guidée progressivement vers la deuxième extrémité 312 de manière à être évacuée radialement vers un point d'aspiration.

Dans ce sens d'écoulement, correspondant au sens de rotation ω de la couronne externe, une plus faible quantité d'huile est évacuée par l'intermédiaire de la deuxième chambre C2 et de l'ouverture radiale 322 via l'écoulement secondaire B. En outre, une certaine quantité d'huile, plus faible que la quantité d'huile s'écoulant dans la gouttière 100 dans le sens de rotation ω, s'écoule dans la gouttière 100, notamment dans le corps principal 101, dans le sens opposé au sens de rotation ω. Dans cette portion du corps principal 101 de la gouttière, correspondant à la portion à gauche de la droite D4 sur la figure 4, l'huile s'écoule par gravité vers la deuxième extrémité 332 du manchon principal 330 du déflecteur, et est évacué vers l'extérieur de la gouttière par le ou les orifices radiaux d'évacuation 326.

On notera en outre que le déflecteur 300 peut comprendre une bride radiale 370, disposée sous le manchon principal 330, et permettant de fixer le déflecteur 300 à la bride annulaire 210 du carter 200, de la même façon que la bride 170 du corps principal 101.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Gouttière (100) de récupération d'huile de lubrification, notamment pour réducteur mécanique (10) de turbomachine d'aéronef, comprenant un corps principal (101) annulaire autour d'un axe central (X), et un déflecteur (300) fixé au corps principal et configuré pour permettre l'évacuation de l'huile radialement depuis une cavité interne (150, 160) du corps principal (101) vers l'extérieur de la gouttière, le déflecteur (300) comprenant un manchon principal (330) disposé dans la continuité du corps principal (101), et un canal d'évacuation (310) configuré pour dévier de l'huile du manchon principal (330), le canal d'évacuation (310) présentant une forme courbe de telle sorte qu'une première extrémité (311) du canal d'évacuation, communiquant avec la cavité interne (150, 160), est tangente au corps principal (101), le canal d'évacuation (310) déviant ensuite progressivement, par sa forme courbe, jusqu'à une deuxième extrémité (312) dirigée vers l'extérieur par rapport au corps principal (101) annulaire, **caractérisée en ce que** la forme courbe du canal d'évacuation (310) comprend une composante axiale de telle sorte que le canal d'évacuation (310) est configuré pour dévier de l'huile du manchon principal (330) dans la direction de l'axe central (X).

2. Gouttière (100) selon la revendication 1, dans laquelle un angle de déviation d'huile (E) du canal d'évacuation (310) par rapport au manchon principal (330) est un angle entre une première droite (D1) tangente au corps principal (101) annulaire et perpendiculaire à l'axe central (X), et une deuxième droite (D2) reliant un premier point (O1) d'une ligne de courbure moyenne du canal d'évacuation (310) à un deuxième point (O2) disposé le long de ladite ligne moyenne, le premier point (O1) appartenant à la première droite (D1) et étant disposé à la première extrémité (311) du canal d'évacuation (310) et le deuxième point (O2) étant situé à une distance D du premier point (O1) où 0 < D ≤ 30 mm, l'angle de déviation (E) étant inférieur à 40°.

3. Gouttière (100) selon la revendication 1 ou 2, dans laquelle une distance B entre la première extrémité (311) et la deuxième extrémité (312) du canal d'évacuation (310) dans une direction parallèle à l'axe central (X), et une distance C entre lesdites première et deuxième extrémités (311, 312) dans une direction perpendiculaire à l'axe central (X) et à une direction radiale (R) du corps principal (101) annulaire, sont telles que B < C.

4. Gouttière (100) selon l'une quelconque des revendications 1 à 3, dans laquelle le canal d'évacuation (310) présente, entre la première extrémité et la deuxième extrémité, une section S fermée.

5. Gouttière (100) selon l'une quelconque des revendications 1 à 4, dans laquelle, dans une vue parallèle à l'axe central (X), un angle β entre une droite (D3) passant par l'axe central (X) et la première extrémité (311) du canal d'évacuation (310), et une droite (D4) passant par l'axe central (X) et la deuxième extrémité (312) du canal d'évacuation, est tel que 5° < β < 120°.

6. Gouttière (100) selon l'une quelconque des revendications 1 à 5, dans laquelle le manchon principal (330) renferme une enceinte interne (I) communiquant avec la cavité interne (150, 160) du corps principal (101) de la gouttière, une paroi radiale de séparation (340) séparant l'enceinte interne (I) en une première chambre de collecte (C1) d'huile en communication fluidique avec le canal d'évacuation (310), et une deuxième chambre de collecte (C2) d'huile comprenant une paroi de fond (320) ayant une ouverture d'évacuation (322).

7. Gouttière (100) selon la revendication 6, dans laquelle la cavité interne du corps principal (101) de la gouttière comprend une chambre d'admission (150) et une cavité d'évacuation (160) communiquant avec la chambre d'admission (150) sur au moins une partie de la circonférence du corps principal (101), la cavité d'évacuation (160) communiquant avec la première chambre de collecte (C1) et la chambre d'admission (150) communiquant avec la deuxième chambre de collecte (C2).

8. Gouttière (100) selon la revendication 7, dans laquelle le corps principal (101) comprend une paroi de ségrégation (142) séparant la chambre d'admission (150) et la cavité d'évacuation (160) sur une portion de la circonférence du corps principal (101) en amont du déflecteur (300).

9. Gouttière (100) selon la revendication 7 ou 8, dans laquelle le corps principal (101) comprend, dans un plan de coupe parallèle à l'axe central (X), une première paroi radiale (110) s'étendant radialement par rapport à l'axe central, au moins une paroi inclinée (120) s'étendant depuis une extrémité radiale externe de la première paroi radiale (110), une portion de guidage (130) ayant une forme générale en U s'étendant depuis une extrémité de la paroi inclinée (120), et une deuxième paroi radiale (140) s'étendant radialement vers l'extérieur par rapport à l'axe central (X) depuis une extrémité de la portion de guidage (130), un espace délimité par la première paroi radiale (110), la deuxième paroi radiale (140) et la paroi inclinée (120) formant la chambre d'admission (150) de l'huile de lubrification, et un espace délimité par la portion de guidage (130) et la deuxième paroi radiale (140) formant la cavité d'évacuation (160) de l'huile de lubrification.

10. Gouttière (100) selon l'une quelconque des revendications 1 à 9, dans laquelle le manchon principal (330) a une première extrémité (331) fixée à une première extrémité circonférentielle (101a) du corps principal (101), et une deuxième extrémité (332) fixée à une deuxième extrémité circonférentielle (101b) du corps principal (101), le manchon principal (330) comprenant une paroi de séparation circonférentielle (350) séparant la première extrémité (331) du manchon principal de sa deuxième extrémité (332).

11. Gouttière (100) selon la revendication 6 et la revendication 10, dans laquelle la deuxième chambre de collecte (C2) au moins est isolée de la deuxième extrémité (332) du manchon principal (330) par la paroi de séparation circonférentielle (350), une paroi de fond (324) du manchon principal entre la deuxième extrémité (332) du manchon principal et la paroi de séparation circonférentielle (350) comprenant au moins un orifice radial d'évacuation (326).

12. Ensemble de transmission de puissance (1') pour turbomachine d'aéronef, comprenant :
- un réducteur mécanique (10) comprenant un pignon central (30) et une couronne externe (50) coaxiaux l'un avec l'autre autour d'un axe principal de rotation (Y), et des pignons satellites (40) engrenant avec le pignon central (30) et la couronne externe (50), la couronne externe (50) comprenant deux demi-couronnes (50A, 50B) ayant chacune une bride annulaire externe (52A, 52B) fixées l'une à l'autre,
- au moins un canal radial d'éjection d'huile (80) formé entre les brides annulaires (52A, 52B) et configuré pour éjecter de l'huile de lubrification par centrifugation,
- une gouttière (100) selon l'une quelconque des revendications 1 à 11 disposée radialement autour des brides annulaires (52A, 52B), de telle sorte que la cavité interne (150, 160) de la gouttière soit radialement en regard du premier canal radial d'éjection d'huile (80).

13. Ensemble selon la revendication 12, dans lequel le déflecteur (300) est disposé dans une partie inférieure de la gouttière (100), de manière à ce que la deuxième extrémité (312) du canal d'évacuation (310) soit disposée à la verticale de l'axe principal de rotation (Y) dans une direction de gravité, la première extrémité (311) du canal d'évacuation (310) étant décalée par rapport à la deuxième extrémité d'un angle β dans un sens opposé à un sens de rotation (ω) de la couronne externe (50), où 5° < β < 120°.

14. Ensemble selon la revendication 12 ou 13, dans lequel la cavité interne du corps principal (101) de la gouttière comprend une chambre d'admission (150) et une cavité d'évacuation (160) communiquant avec la chambre d'admission (150) sur au moins une partie de la circonférence du corps principal (101), la chambre d'admission (150) étant disposée à une même position axiale le long de l'axe central (X) qu'un plan radial (P1) d'éjection d'huile du réducteur (10) comprenant l'au moins un canal radial d'éjection d'huile (80), de manière à récupérer l'huile de lubrification provenant du réducteur (10) et la dévier vers la cavité d'évacuation (160).

## Patentansprüche

1. Rinne (100) zum Auffangen von Schmieröl, insbesondere für ein mechanisches Untersetzungsgetriebe (10) einer Luftfahrzeugströmungsmaschine, umfassend einen Hauptkörper (101), der um eine mittlere Achse (X) ringförmig ist, und einen Deflektor (300), der an dem Hauptkörper befestigt und konfiguriert ist, um die Ableitung des Öls radial aus einem inneren Hohlraum (150, 160) des Hauptkörpers (101) zu der Außenseite der Rinne zu ermöglichen, der Deflektor (300) umfassend eine Haupthülse (330), die in Fortsetzung des Hauptkörpers (101) angeordnet ist, und einen Ablaufkanal (310), der konfiguriert ist, um Öl von der Haupthülse (330) abzuleiten, wobei der Ablaufkanal (310) eine gekrümmte Form aufweist, sodass ein erstes Ende (311) des Ablaufkanals, das mit dem inneren Hohlraum (150, 160) in Verbindung ist, tangential zu dem Hauptkörper (101) ist, wobei der Ablaufkanal (310) dann durch seine gekrümmte Form allmählich bis zu einem zweiten Ende (312) abzweigt, das von dem ringförmigen Hauptkörper (101) nach außen gerichtet ist, **dadurch gekennzeichnet, dass** die gekrümmte Form des Ablaufkanals (310) eine axiale Komponente umfasst, sodass der Ablaufkanal (310) konfiguriert ist, um Öl von der Haupthülse (330) in Richtung der mittleren Achse (X) abzuleiten.

2. Rinne (100) nach Anspruch 1, wobei ein Ölablenkwinkel (E) des Ablaufkanals (310) in Bezug auf die Haupthülse (330) ein Winkel zwischen einer ersten Geraden (D1), die den ringförmigen Hauptkörper (101) tangiert und senkrecht zu der mittleren Achse (X) ist, und eine zweite Gerade (D2) einen ersten Punkt (O1) einer mittleren Krümmungslinie des Ablaufkanals (310) mit einem zweiten Punkt (O2) verbindet, der entlang der mittleren Linie angeordnet ist, der erste Punkt (O1) zu der ersten Geraden (D1) gehört und an dem ersten Ende (311) des Ablaufkanals (310) angeordnet ist, und wobei der zweite Punkt (O2) in einem Abstand D von dem ersten Punkt (O1) ist, wobei 0 < D ≤ 30 mm, wobei der Ablenkwinkel (E) kleiner ist als 40°.

3. Rinne (100) nach Anspruch 1 oder 2, wobei ein Abstand B zwischen dem ersten Ende (311) und dem zweiten Ende (312) des Ablaufkanals (310) in einer Richtung parallel zu der mittleren Achse (X) und ein Abstand C des ersten und des zweiten Endes (311, 312) in einer Richtung senkrecht zu der mittleren Achse (X) und zu einer radialen Richtung (R) des ringförmigen Hauptkörpers (101) derart sind, dass B < C.

4. Rinne (100) nach einem der Ansprüche 1 bis 3, wobei der Ablaufkanal (310) zwischen dem ersten Ende und dem zweiten Ende einen geschlossenen Abschnitt S aufweist.

5. Rinne (100) nach einem der Ansprüche 1 bis 4, wobei in einer Ansicht parallel zu der mittleren Achse (X) ein Winkel β zwischen einer Geraden (D3), die durch die mittlere Achse (X) und das erste Ende (311) des Ablaufkanals (310) verläuft, und einer Geraden (D4), die durch die mittlere Achse (X) und das zweite Ende (312) des Ablaufkanals verläuft, derart ist, dass 5° < β < 120°.

6. Rinne (100) nach einem der Ansprüche 1 bis 5, wobei die Haupthülse (330) einen inneren Bereich (I) umschließt, die mit dem inneren Hohlraum (150, 160) des Hauptkörpers (101) der Rinne in Verbindung ist, eine radiale Trennwand (340) den inneren Bereich (I) in eine erste Ölsammelkammer (C1) in Fluidverbindung mit dem Ablaufkanal (310) unterteilt, und wobei eine zweite Ölsammelkammer (C2) eine Bodenwand (320) umfasst, die eine Ablauföffnung (322) aufweist.

7. Regenrinne (100) nach Anspruch 6, wobei der innere Hohlraum des Hauptkörpers (101) der Rinne eine Einlasskammer (150) und einen Ablaufhohlraum (160), der mit der Einlasskammer (150) über mindestens einen Teil des Umfangs des Hauptkörpers (101) in Verbindung ist, umfasst, wobei der Ablaufhohlraum (160) mit der ersten Sammelkammer (C1) in Verbindung ist und die Einlasskammer (150) mit der zweiten Sammelkammer (C2) in Verbindung ist.

8. Rinne (100) nach Anspruch 7, wobei der Hauptkörper (101) eine Segregationswand (142) umfasst, die die Einlasskammer (150) und den Ablaufhohlraum (160) über einen Abschnitt des Umfangs des Hauptkörpers (101) stromaufwärts von dem Deflektor (300) trennt.

9. Rinne (100) nach Anspruch 7 oder 8, wobei der Hauptkörper (101) in einer Schnittebene parallel zu der mittleren Achse (X) eine erste radiale Wand (110), die sich radial in Bezug auf die mittlere Achse erstreckt, wobei sich mindestens eine schräge Wand (120) von einem radial äußeren Ende der ersten radialen Wand (110) erstreckt, einen Führungsabschnitt (130), der generell eine U-Form aufweist, der sich von einem Ende der geneigten Wand (120) erstreckt, und eine zweite radiale Wand (140), die sich in Bezug auf die mittlere Achse (X) von einem Ende des Führungsabschnitts (130) radial nach außen erstreckt, einen Raum, der von der ersten radialen Wand (110) begrenzt wird, wobei die zweite radiale Wand (140) und die geneigte Wand (120) die Einlasskammer (150) für das Schmieröl bilden, und ein Raum, der durch den Führungsabschnitt (130) und die zweite radiale Wand (140) begrenzt ist, den Ablaufhohlraum (160) für das Schmieröl bildet, umfasst.

10. Rinne (100) nach einem der Ansprüche 1 bis 9, wobei die Haupthülse (330) ein erstes Ende (331), das an einem ersten Umfangsende (101a) des Hauptkörpers (101) befestigt ist, und ein zweites Ende (332), das an einem zweiten Umfangsende (101b) des Hauptkörpers (101) befestigt ist, aufweist, die Haupthülse (330) umfassend eine umlaufende Trennwand (350), die das erste Ende (331) der Haupthülse von ihrem zweiten Ende (332) trennt.

11. Rinne (100) nach Anspruch 6 und Anspruch 10, wobei die mindestens zweite Sammelkammer (C2) durch die umlaufende Trennwand (350) von dem zweiten Ende (332) der Haupthülse (330) isoliert ist, eine Bodenwand (324) der Haupthülse zwischen dem zweiten Ende (332) der Haupthülse und der umlaufende Trennwand (350), die mindestens eine radiale Ablauföffnung (326) umfasst.

12. Leistungsübertragungsanordnung (1') für Luftfahrzeugströmungsmaschine, umfassend:
- ein mechanisches Untersetzungsgetriebe (10), umfassend ein mittleres Zahnrad (30) und ein Hohlrad (50), die um eine Hauptdrehachse koaxial zueinander (Y) sind, und Planetenräder (40), die mit dem mittleren Zahnrad (30) und dem Hohlrad (50) kämmen, das Hohlrad (50) umfassend zwei Halbhohlräder (50A, 50B), die jeweils einen äußeren ringförmigen Flansch (52A, 52B) aufweisen, die aneinander befestigt sind,
- mindestens einen radialen Ölausstoßkanal (80), der zwischen den ringförmigen Flanschen (52A, 52B) gebildet und konfiguriert ist, um Schmieröl durch Zentrifugation auszustoßen,
- eine Rinne (100) nach einem der Ansprüche 1 bis 11, die radial um die ringförmigen Flansche (52A, 528) herum angeordnet ist, sodass der innere Hohlraum (150, 160) der Rinne dem ersten radialen Ölausstoßkanal (80) radial zugewandt ist.

13. Anordnung nach Anspruch 12, wobei der Deflektor (300) in einem unteren Teil der Rinne (100) angeordnet ist, sodass das zweite Ende (312) des Ablaufkanals (310) in einer Schwerkraftrichtung vertikal zu der Hauptdrehachse (Y) angeordnet ist, wobei das erste Ende (311) des Ablaufkanals (310) in Bezug auf das zweite Ende um einen Winkel β in einer Richtung entgegengesetzt zu einer Drehrichtung (ω) des Außenrings (50) versetzt ist, wobei 5° < β < 120°.

14. Anordnung nach Anspruch 12 oder 13, wobei der innere Hohlraum des Hauptkörpers (101) der Rinne eine Einlasskammer (150) und einen Ablaufhohlraum (160) umfasst, der mit der Einlasskammer (150) über mindestens einen Teil des Umfangs des Hauptkörpers (101) in Verbindung ist, die Einlasskammer (150) an derselben axialen Position entlang der mittleren Achse (X) angeordnet ist wie eine radiale Ölausstoßebene (P1) des Untersetzungsgetriebes (10), die den mindestens einen radialen Ölausstoßkanal (80) umfasst, um das von dem Untersetzungsgetriebe (10) kommende Schmieröl aufzufangen und es in den Ablaufhohlraum (160) abzuleiten.

## Claims

1. A gutter (100) for recovering lubrication oil, particularly for a mechanical reducer (10) of an aircraft turbomachine, comprising an annular main body (101) around a central axis (X), and a deflector (300) attached to the main body and configured to allow the evacuation of the oil radially from an inner cavity (150, 160) of the main body (101) toward the outside of the gutter, the deflector (300) comprising a main sleeve (330) disposed in the extension of the main body (101), and an evacuation channel (310) configured to divert oil from the main sleeve (330), the evacuation channel (310) and having a curved shape such that a first end (311) of the evacuation channel, communicating with the inner cavity (150, 160), is tangent to the main body (101), the evacuation channel (310) then gradually deviating, due to its curved shape, all the way to a second end (312) directed outward with respect to the annular main body (101), **characterized in that** the curved shape of the evacuation channel (310) comprises an axial component such that the evacuation channel (310) is configured to divert oil from the main sleeve (330) in the direction of the central axis (X).

2. The gutter (100) as claimed in claim 1, wherein an oil deflection angle (E) of the evacuation channel (310) with respect to the main sleeve (330) is an angle between a first straight line (D1) tangent to the annular main body (101) and perpendicular to the central axis (X), and a second straight line (D2) connecting a first point (O1) of a line of mean curvature of the evacuation channel (310) to a second point (O2) disposed along said line of mean curvature, the first point (O1) belonging to the first straight line (D1) and being disposed at the first end (311) of the evacuation channel (310) and the second point (O2) being located at a distance D from the first point (O1) where 0 < D ≤ 30 mm, the deflection angle (E) being less than 40°.

3. The gutter (100) as claimed in claim 1 or 2, wherein a distance B between the first end (311) and the second end (312) of the evacuation channel (310) in a direction parallel to the central axis (X), and a distance C between said first and second ends (311, 312) in a direction perpendicular to the central axis (X) and to a radial direction (R) of the annular main body (101) are such that B < C.

4. The gutter (100) as claimed in any of claims 1 to 3, wherein the evacuation channel (310) has, between the first end and the second end, a closed section S.

5. The gutter (100) as claimed in any of claims 1 to 4, wherein, in a view parallel to the central axis (X), an angle β between a straight line (D3) passing through the central axis (X) and the first end (311) of the evacuation channel (310), and a straight line (D4) passing through the central axis (X) and the second end (312) of the evacuation channel, is such that 5° < β < 120°.

6. The gutter (100) as claimed in any of claims 1 to 5, wherein the main sleeve (330) encloses an inner chamber (I) communicating with the inner cavity (150, 160) of the main body (101) of the gutter, a radial separating wall (340) separating the inner chamber (I) into a first oil collection chamber (C1) in fluid communication with the evacuation channel (310), and a second oil collection chamber (C2) comprising a bottom wall (320) having an evacuation opening (322).

7. The gutter (100) as claimed in claim 6, wherein the inner cavity of the main body (101) of the gutter comprises an intake chamber (150) and an evacuation cavity (160) communicating with the intake chamber (150) over at least a part of the circumference of the main body (101), the evacuation cavity (160) communicating with the first collection chamber (C1) and the intake chamber (150) communicating with the second collection chamber (C2).

8. The gutter (100) as claimed claim 7, wherein the main body (101) comprises a segregating wall (142) separating the intake chamber (150) and the evacuation cavity (160) over a portion of the circumference of the main body (101) upstream of the deflector (300).

9. The gutter (100) as claimed in claim 7 or 8, wherein the main body (101) comprises, in a section plane parallel to the central axis (X), a first radial wall (110) extending radially with respect to the central axis, and at least one inclined wall (120) extending from an outer radial end of the first radial wall (110), a guide portion (130) having an overall U shape extending from one end of the inclined wall (120), and a second radial wall (140) extending radially outward with respect to the central axis (X) from one end of the guide portion (130), a space delimited by the first radial wall (110), the second radial wall (140) and the inclined wall (120) forming the lubrication oil intake chamber (150), and a space delimited by the guide portion (130) and the second radial wall (140) forming a lubrication oil evacuation cavity (160).

10. The gutter (100) as claimed in any of claims 1 to 9, wherein the main sleeve (330) has a first end (331) attached to a first circumferential end (101a) of the main body (101), and a second end (332) attached to a second circumferential end (101b) of the main body (101), the main sleeve (330) comprising a circumferential separating wall (350) separating the first end (331) of the main sleeve from its second end (332).

11. The gutter (100) as claimed in claim 6 and claim 10, wherein the second collection chamber (C2) at least is isolated from the second end (332) of the main sleeve (330) by the circumferential separating wall (350), a bottom wall (324) of the main sleeve between the second end (332) of the main sleeve and the circumferential separating wall (350) comprising at least one radial evacuation hole (326).

12. A power transmission assembly (1') for an aircraft turbomachine, comprising:
- a mechanical reducer (10) comprising a central gear (30) and an outer ring gear (50) coaxial with one another around a main axis of rotation (Y), and planet gears (40) meshing with the central gear (30) and the outer ring gear (50), the outer ring gear (50) comprising two half-ring gears (50A, 50B) each having an outer annular flange (52A, 52B) attached to one another,
- at least one radial oil ejection channel (80) formed between the annular flanges (52A, 52B) and configured to eject lubrication oil by centrifugal force,
- a gutter (100) as claimed in any of claims 1 to 11 radially disposed around the annular flanges (52A, 52B), such that the inner cavity (150, 160) of the gutter is radially facing the first radial oil ejection channel (80).

13. The assembly as claimed in claim 12, wherein the deflector (300) is disposed in a lower part of the gutter (100), in such a way that the second end (312) of the evacuation channel (310) is disposed vertical to the main axis of rotation (Y) in a direction of gravity, the first end (311) of the evacuation channel (310) being offset with respect to the second end by an angle β in a direction opposite to the direction of rotation (ω) of the outer ring gear (50), where 5° < β < 120°.

14. The assembly as claimed in claim 12 or 13, wherein the inner cavity of the main body (101) of the gutter comprises an intake chamber (150) and an evacuation cavity (160) communicating with the intake chamber (150) over at least a part of the circumference of the main body (101), the intake chamber (150) being disposed at the same axial position along the central axis (X) as a radial oil ejection plane (P1) of the reducer (10) comprising the at least one radial oil ejection channel (80), in such a way as to recover the lubrication oil coming from the reducer (10) and divert it toward the evacuation cavity (160).
